(19) 

**Europäisches Patentamt**
**European Patent Office**
**Office européen des brevets**

(11) **EP 3 471 394 A1**

(12) **EUROPEAN PATENT APPLICATION**

(43) Date of publication:
**17.04.2019 Bulletin 2019/16**

(51) Int Cl.:
**H04N 5/232** *(2006.01)* **H04N 1/21** *(2006.01)*
**H04N 5/77** *(2006.01)*

(21) Application number: **18199431.0**

(22) Date of filing: **09.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2017 CN 201710933763**
**12.09.2018 US 201816128726**

(71) Applicant: **Shanghai Xiaoyi Technology Co., Ltd.**
**Shanghai 201203 (CN)**

(72) Inventors:
• **JIN, Li**
**Shanghai, 201203 (CN)**
• **ZHANG, Xuewu**
**Shanghai, 201203 (CN)**

(74) Representative: **Finnegan Europe LLP**
**1 London Bridge**
**London SE1 9BG (GB)**

(54) **TIME-LAPSE PHOTOGRAPHING CONTROL METHOD AND APPARATUS, READABLE STORAGE MEDIUM, AND CAMERA**

(57) Method, apparatus, computer-readable storage medium, and camera for controlling time-lapse photographing are disclosed. The method comprises: detecting whether a time-lapse photographing session at the camera has ended after taking a photograph by a camera at a time of a current photographing event; calculating (S101) a time of the next turning-on of the camera, the calculated time being earlier than the time of the next photographing event, which is the sum of the time of the current photographing event and the time interval between photographing events; utilizing (S102) the time of the next turning-on of the camera to configure a real time clock; shutting down the camera; starting up (S103) the camera when the real time clock reaches the time of the next turning-on of the camera; causing (S104) the camera to take a photograph when the time of the next photographing event is reached.

Calculating a time of the next turning-on of the camera if, after the camera has been caused to take a photograph, it is detected that a time-lapse photographing session has not concluded, the time of the next turning-on of the camera being earlier than the time of the next photographing event, the time of the next photographing event being the sum of the time of the current photographing event and the time interval between shootings — S101

Utilizing the time of the next turning-on of the camera to configure a real time clock, and shutting down the camera — S102

Starting up said camera when the real time clock reaches the time of the next turning-on of the camera — S103

Causing said camera to take a photograph when said time of the next photographing event is reached — S104

**100**

**Figure 1**

EP 3 471 394 A1

**Description**

**TECHNICAL FIELD**

This invention relates to the field of imaging technology, and particularly to a method, an apparatus, a computer-readable storage medium, and a camera for controlling time-lapsing photographing.

**BACKGROUND**

Time-lapse photography, also known as time-lapse shooting, timed photography, or time-lapse photography is a photography technique according to which images or video are captured at a relatively low frame rate and then the captured images are displayed (played back) at a normal or increased speed. Utilizing an intervalometer, the shutter is actuated to capture (obtain, shoot) a photograph at predefined time intervals (after each time interval passes) to obtain after a passage of a length of time, a number of photographs, which are displayed (played back) continuously. This time-lapse photography technique may be used, for example, to capture images of the processes, such as the blooming of a flower, the dawning of the day, clouds being blown by the wind, etc.

Utilizing the time-lapse photographing functionality may require a long period of shooting by a camera. Because of the long duration, power consumption may need to be reduced in order to extend the camera's operation time to support photographing.

A currently available technology places the camera in a sleep mode (puts the camera to sleep) during the intervals between the photographing events to reduce power consumption.

However, when the camera is in the sleep mode, some hardware and/or software in the camera is still running, causing power consumption by the camera even while in sleep mode.

**SUMMARY**

The technical problem addressed by this invention is how to reduce a camera's power consumption during a time-lapse photographing session.

In order to solve the aforementioned technical problem, in accordance with aspects of the invention there are provided a method for controlling time-lapse photographing, a time-lapse photographing control apparatus, and a computer-readable storage medium as set out in claims 1, 8, and 11 respectively.

One example embodiment of the present invention provides a time-lapse photographing control method, the time-lapse photographing control method comprising:

calculating a time of the next turning-on of the camera if, after the camera has been caused to take a photograph, it is detected that a time-lapse photographing session has not concluded, said time of the next turning-on of the camera being earlier than the time of the next photographing event, said time of the next photographing event being the sum of the time of the current photographing event and the time interval between shootings; utilizing said time of the next turning-on of the camera to configure a real time clock, and shutting down said camera; starting up said camera when said real time clock reaches said time of the next turning-on of the camera; causing said camera to take a photograph when said time of the next photographing event is reached.

Optionally, said calculating a time of the next turning-on of the camera comprises: calculating the difference between the time of the next photographing event and the preset advance starting-up time value, to be used as said time of the next turning-on of the camera.

Optionally, said causing said camera to take a photograph when said time of the next photographing event is reached comprises: calculating and obtaining said time of the next photographing event according to said time of the current photographing event and said time interval between shootings; utilizing a timer for timing, and, when said time of the next photographing event is reached, causing said camera to take a photograph.

Optionally, the method, after said utilizing said time of the next turning-on of the camera to configure a real time clock, further comprises: calculating and obtaining said time of the next photographing event according to said time of the current photographing event and said time interval between shootings; saving said time of the next photographing event to a non-volatile storage device.

Optionally, said causing said camera to take a photograph when said time of the next photographing event is reached comprises: reading said time of the next photographing event from said non-volatile storage device; utilizing a timer for timing, and, when said time of the next photographing event is reached, causing said camera to take a photograph.

Optionally, said saving said time of the next photographing event to a non-volatile storage device comprises: calculating a cyclic redundancy check (CRC) value for data to be stored, and storing said CRC value together with said data to be stored, in order to be used to check, at the time of reading, said data to be stored, said data to be stored comprising said time of the next photographing event.

Optionally, said reading said time of the next photographing event from said non-volatile storage device comprises: reading said data to be stored from said non-volatile storage device; calculating a CRC check code for said data to be stored; if said CRC check code is consistent with said CRC value, then using said data to be stored as said time of the next photographing event.

In order to solve the aforementioned technical problem, one example embodiment of the present invention provides a time-lapse photographing control apparatus, the time-lapse photographing control apparatus comprising: a next camera turning-on time calculating module adapted to calculate a time of the next turning-on of the camera if, after the camera has been caused to take a photograph it is detected, that a time-lapse photographing session has not concluded, said time of the next turning-on of the camera being earlier than the time of the next photographing event, said time of the next photographing event being the sum of the time of the current photographing event and the time interval between shootings; a camera shutting-down configuration module adapted to utilize said time of the next turning-on of the camera to configure a real time clock, and shut down said camera; a camera starting-up module adapted to start up said camera when said real time clock reaches said time of the next turning-on of the camera; a photographing module adapted to cause said camera to take a photograph when said time of the next photographing event is reached.

Optionally, said next camera turning-on time calculating module comprises: a first calculating unit adapted to calculate the difference between the time of the next photographing event and the preset advance starting-up time value, to be used as said time of the next turning-on of the camera.

Optionally, said photographing module comprises: a next photographing event time calculating unit adapted to calculate and obtain said time of the next photographing event according to said time of the current photographing event and said time interval between shootings; a first photograph-taking unit adapted to utilize a timer for timing, and, when said time of the next photographing event is reached, cause said camera to take a photograph.

Optionally, said time-lapse photographing control apparatus further comprises: a next photographing event time calculating module adapted to calculate and obtain said time of the next photographing event according to said time of the current photographing event and said time interval between shootings; a next photographing event time storing module adapted to save said time of the next photographing event to a non-volatile storage device.

Optionally, said photographing module comprises: a next photographing event time reading unit adapted to read said time of the next photographing event from said non-volatile storage device; a second photograph-taking unit adapted to utilize a timer for timing, and, when said time of the next photographing event is reached, cause said camera to take a photograph.

Optionally, said next photographing event time storing module calculates a CRC value for data to be stored, and stores said CRC value together with said data to be stored, in order to be used to check, at the time of reading, said data to be stored, said data to be stored comprising said time of the next photographing event.

Optionally, said next photographing event time reading unit comprises: a data-to-be-stored reading subunit adapted to read said data to be stored from said non-volatile storage device; a check code calculating subunit adapted to calculate a CRC check code for said data to be stored; a reading subunit adapted to use said data to be stored as said time of the next photographing event if said CRC check code is consistent with said CRC value.

One example embodiment of the present invention further discloses a readable storage medium in which a computer instruction is stored, the steps in said time-lapse photographing control method being executed when said computer instruction is run.

One example embodiment of the present invention further discloses a camera, which comprises a storage device and a processor, said storage device storing a computer instruction that may be run on said processor, said steps in said time-lapse photographing control method being executed when said processor runs said computer instruction.

In comparison with currently available technology, the technical solution provided by example embodiments of the present invention has the following benefits:
in the solution provided by the present invention, a time of the next turning-on of the camera is calculated if, after the camera is caused to take a photograph, it is detected that a time-lapse photographing session has not concluded, said time of the next turning-on of the camera being earlier than the time of the next photographing event, said time of the next photographing event being the sum of the time of the current photographing event and the time interval between shootings; said time of the next turning-on of the camera is utilized to configure a real time clock, and said camera is shut down; said camera is started up when said real time clock reaches said time of the next turning-on of the camera; said camera is caused to take a photograph when said time of the next photographing event is reached. In the solution provided by the present invention, the camera is shut down after the current photographing event is completed; a real time clock configured with the time of the next turning-on of the camera is utilized to trigger the camera to start up, and another photographing event takes place, so as to minimize the camera's power consumption throughout the entire duration of a time-lapse photographing session and maximize the camera's operational time, thereby enhancing camera performance and the user experience.

Further, said time of the next photographing event is read from said non-volatile storage device; a timer is utilized for timing, and, when said time of the next photographing event is reached, said camera is caused to take a photograph. In the technical solution provided by the present invention, the time of the next photographing event is read from a non-volatile storage device; consequently, after the camera is started up, a photograph can be taken precisely at the time of the next photographing event and the normal execution of the time-lapse photographing function can be ensured.

Further, a CRC value for data to be stored is calculated, and said CRC value is stored together with said data to be stored, in order to be used to check, at the time of reading, said data to be stored, said data to be stored comprising said time of the next photographing event. In this technical solution provided by the present invention, the calculation and storage of a CRC value for data to be stored can ensure accuracy of data retrieval, thereby ensuring the normal execution of the time-lapse photographing function when the camera is configured with multiple time-lapse photographing parameters.

## BRIEF DESCRIPTION OF THE DRAWINGS

Figure 1 is a flow diagram illustrating a method for controlling a time-lapse photographing according to example embodiments of the present invention;
Figure 2 is a flow diagram illustrating another method for controlling a time-lapse photographing according to example embodiments of the present invention;
Figure 3 is a structural diagram illustrating a time-lapse photographing control apparatus according to example embodiments of the present invention.

## DETAILED DESCRIPTION

As described above, when a camera is in a sleep mode, some hardware or software in the camera may still be running, causing power consumption by the camera even while in the sleep mode.

In the solution described herein, the camera is shut down after the current photographing event is completed. A real time clock configured with the time of the next turning-on of the camera is utilized to trigger the camera to start up, and another photographing event takes place. In this manner, the camera's power consumption is minimized throughout the entire duration of a time-lapse photographing session and the camera's operational time is maximized, thereby enhancing camera performance and the user experience.

In order to make the aforementioned purpose, characteristics, and advantages of the present invention more evident and easier to understand, detailed descriptions of specific example embodiments of the present invention are provided below with reference to the drawings attached.

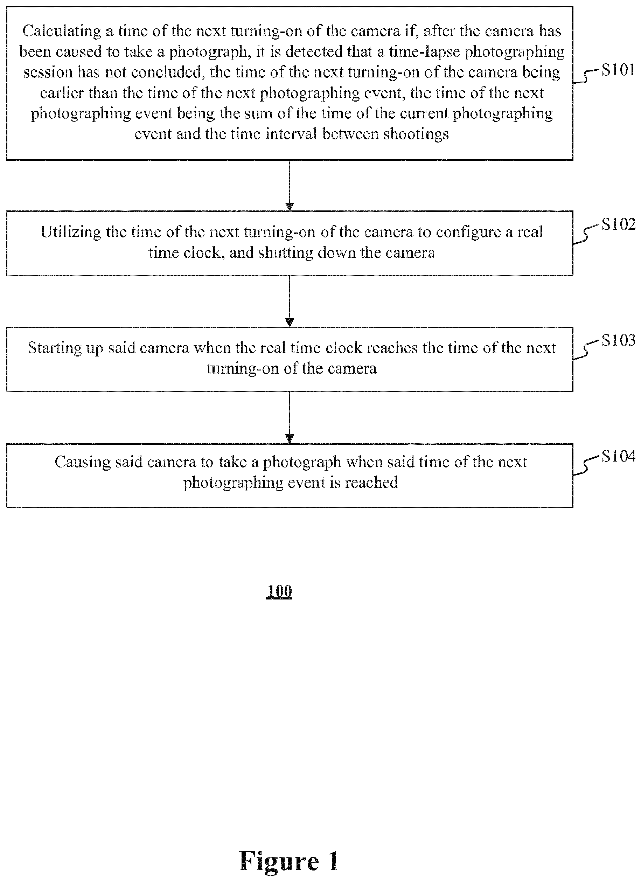

Figure 1 is a flow diagram illustrating a method for controlling time-lapse photographing according to example embodiments of the present invention.

The method for controlling time-lapse photographing illustrated in Figure 1 comprises the following steps:

Step S101: calculating a time of the next turning-on of the camera if, after the camera has been caused to capture an image (take a photograph), it is detected that a time-lapse photographing session has not concluded, said time of the next turning-on of the camera being earlier than the time of the next photographing event, said time of the next photographing event being the sum of the time of the current photographing event and the time interval between the photographing events (shootings);
Step S102: utilizing said time of the next turning-on of the camera to configure a real time clock, and shutting down the camera;
Step S103: starting up the camera when said real time clock reaches said time of the next turning-on of the camera; and
Step S104: causing said camera to capture an image (take a photograph) when said time of the next photographing event is reached.

In this example embodiment, time-lapse parameters may be configured prior to beginning a time-lapse photographing session using the camera. The time-lapse parameters may comprise a time-lapse start time, a time-lapse conclusion (end) time, and a time interval between photographic events (shootings). The time interval between the photographic events (shootings) may refer to the length of time between the two photographing events. For example, the time interval between photographic events (shootings) may be 2 minutes, 5 minutes, 10 minutes, 30 minutes, 60 minutes, etc.

In step S101, after the camera is caused to complete one photographing event, whether the time-lapse photographing session has concluded may be detected. If it is detected that a time-lapse photographing session has not concluded, then the time of the next turning-on of the camera may be calculated. The calculated time of the next turning on is then used to cause the camera to start up (to turn on the camera). If it is detected that the time-lapse photographing session has concluded, then the time-lapse photographing mode may be exited, or any other desired camera operation may be executed.

In some example embodiments, if a user triggers a button during the time-lapse photographing session, then the time-lapse photographing session will conclude; if no button message is detected, then it is indicated that a time-lapse photographing session has not concluded.

It would be appreciated that the time of the current photographing event and the time of the next turning-on of the camera are both points in time. Further, the time of the next turning-on of the camera may be a time value of the real time clock.

To ensure that the camera is able to take a photograph (capture an image) at the time of the next photographing event the time of the next turning-on of the camera may be earlier than the time of the next photographing event, as the starting-up of the camera requires time.

When the camera is in the shut-down state, the real time clock of the camera is still running. Therefore, in Step S102, the time of the next turning-on of the camera may be utilized to configure the real time clock, and the camera is then shut down. Then, in Step S103, the camera may be started up when the real time clock reaches the time of the next turning-on of the camera.

In other words, when the camera is in the shut-down state, the real time clock of the camera is still running, but other hardware or software are not running. Consequently, the real time clock may be utilized to trigger the starting-up of the camera. Therefore, in contrast to the systems that place the camera into a sleep mode during the intervals between photographing events, and thus hardware and software are still running, consuming energy; the described example embodiments of the present invention may further reduce the amount of power consumed by the camera by shutting down the camera and having only the real time clock running during the interval between two photographing events.

The time of the next turning-on of the camera may be written into a register in the real time clock module. When the real time clock reaches the time of the next turning-on of the camera, the real time clock module can automatically trigger the power supply system of the camera to wake the camera's central processing unit (CPU) to start up the camera.

In some examples, after the camera has been started up when the time of the next photographing event is reached, the camera is caused to take a photograph (Step S104). Next, Steps S101 through S104 may be executed repeatedly until the time-lapse photographing session is concluded (ended).

It should be appreciated that during the process of a time-lapse photographing session, with the exception of the final photographing event, steps S101 through S104 illustrated in Figure 1 may be executed after each photographing event. After exiting the time-lapse photographing mode during the process of a time-lapse photographing session, steps S101 through S104 may no longer be executed.

In some example embodiments of the present invention, the camera is shut down after the current photographing event is completed. The real time clock configured with the time of the next turning-on of the camera is utilized to trigger the camera to start up, and then another photographing event takes place. In this manner, the camera's power consumption is minimized throughout the entire duration of the time-lapse photographing session and the camera's operational time is maximized, thereby enhancing camera performance and the user experience. Moreover, the camera's power consumption can also be minimized by having the camera to be shut down during the time intervals between shootings.

Preferably, step S101 may comprise the following step: calculating (determining) the difference between the time of the next photographing event and the preset advance starting-up time value to be used as the time of the next turning-on of the camera.

In this example embodiment, the preset advance starting-up time value may be set in advance (ahead of time), and the time interval between shootings (photographic events) is also set in advance (ahead of time). The time of the next photographing event is a sum of time of the current photographing event and the time interval between photographing events (shootings).For example, the next time of the next turning-on of the camera may be calculated as follows:

$$\text{"time of the next turning-on of the camera"} = \text{"time of the current photographing event"} + \text{"time interval between photographing events"} - \text{"value of the preset advance starting-up time value"}.$$

Here, the preset advance starting-up time value (also referred as pre-turning-on time value) may indicate a length of time that the camera's system requires to start up the camera. The value of the preset advance starting-up time value (pre-turning-on time value) may be adaptively set, for example, at 2 seconds, 15 seconds, etc., and it is not limited by example embodiments described herein.

In example embodiments of this invention, step S104 illustrated in Figure 1 may comprise the following steps: calculating the time of the next photographing event according to the time of the current photographing event and the time interval between photographing events (shootings); utilizing a timer for timing, and, when the time of the next photographing event is reached, causing the camera to take a photograph.

In this example embodiment, after the camera is started up, the time of the next photographing event may be obtained by calculation; the timer may be set and started up, and another photograph may be taken when the time of the next photographing event is reached by the timer.

In some example embodiments of the present invention, the time of the next photographing event may be calculated and stored before the camera shuts down. Then, after the camera is started up, the time of the next photographing event is read in order to take another photograph. The precision of the photographing can be ensured by means of storing and reading the time of the next photographing event.

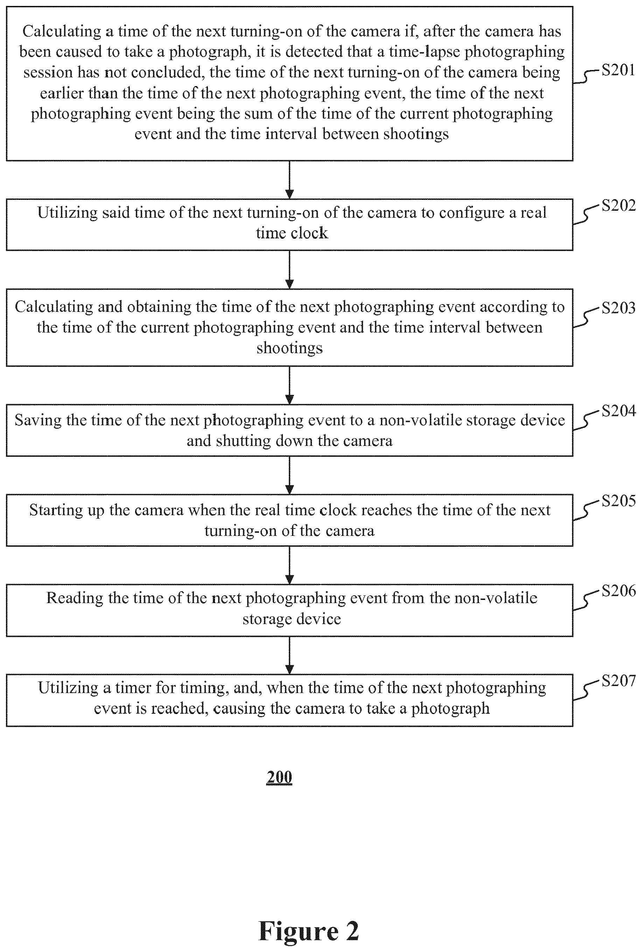

Referring to Figure 2, in some example embodiments, a method for controlling time-lapse photographing comprises the following steps:

Step S201: calculating a time of the next turning-on of the camera if, after the camera has been caused to take a photograph, it is detected that a time-lapse photographing session has not concluded (ended), the time of the next turning-on of the camera being earlier than the time of the next photographing event, the time of the next photographing event being the sum of the time of the current photographing event and the time interval between photographing events (shootings).

Step S202: utilizing the time of the next turning-on of the camera to configure a real time clock.

Steps S201 through S202 are substantially the same as steps S101 through S102 illustrated in Figure 1. Detailed description of these steps is provided above with reference to Figure 1.

Step 203: calculating the time of the next photographing event according to the time of the current photographing event and the time interval between photographing events (shootings).

Step S204: saving the time of the next photographing event to a non-volatile storage device and shutting down the camera.

In some embodiments, because a non-volatile storage device does not lose data when its power is cut off, the time of the next photographing event may be saved in a non-volatile storage device such that the time of the next photographing event may still be obtained from the non-volatile storage device after the camera has been shut down and then started up again. It should be noted that the time of the next turning-on of the camera is used for configuring the real time clock and therefore need not necessarily be stored in the non-volatile storage device.

Step S205: starting up the camera when the real time clock reaches the time of the next turning-on of the camera.

Step S206: reading the time of the next photographing event from the non-volatile storage device.

Step S207: when said time of the next photographing event is reached, causing said camera to take a photograph.

A timer may be utilized for timing.

In some embodiments, after the real time clock reaches the time of the next turning-on of the camera, a signal to start up the camera's system may be sent to the power supply management module by means of hardware signaling.

In some example embodiments, after the camera is started up, the time of the next photographing event is obtained from the non-volatile storage device, the timer is started up, and, when the timer reaches the time of the next photographing event, another photograph is taken. And, the photograph may be saved.

Step S204 may comprise the following step: calculating a cyclic redundancy check (CRC) value of the data to be stored, and storing the CRC value together with the data to be stored. This CRC value may be used to check, at the time of reading, the data to be stored. The data to be stored may include the time of the next photographing event.

In this example embodiment, by calculating and storing the CRC value for the data to be stored, accuracy of data retrieval can be ensured, thereby ensuring the normal execution of the time-lapse photographing function when the camera is configured with a plurality of types of time-lapse photographing parameters.

In the non-volatile storage device, the structure of data to be stored may comprise a header, data, and a CRC value. The header is used to indicate the type and length of the data; the data is valid data; the CRC value is a check value for verifying the data. Each time when the data and header are updated, the CRC value is updated synchronously so that abnormal damage to the data can be avoided and the use of erroneous values can be eliminated.

The process for writing in the data to be stored and the CRC value may include: filling in the header data according to actual data length, calculating the CRC value according to the data header and data, writing the aforementioned 3 values, i.e., the header, the data, and the CRC value, into the non-volatile storage device. The data type may be fixed, and the actual length of the data may be updated.

Further, step S206 may comprise the following steps: reading the stored data from the non-volatile storage device; calculating a CRC check code for the read data; if the CRC check code is consistent with the CRC value, then using the read data as the time of the next photographing event.

In some example embodiments, the process of reading data from the non-volatile storage device is as follows: reading the header from the non-volatile storage device; obtaining the length of the data and reading the value of the data, according to the header information; dynamically calculating a CRC value according to the header and the data, comparing this CRC value with the stored CRC value, and if the result of the comparison indicates that the two CRC values are consistent, then the data is usable and the read data is utilized to continue the photographing operation, otherwise, the stored data that has been read is not used and the photographing process automatically concludes (ends).

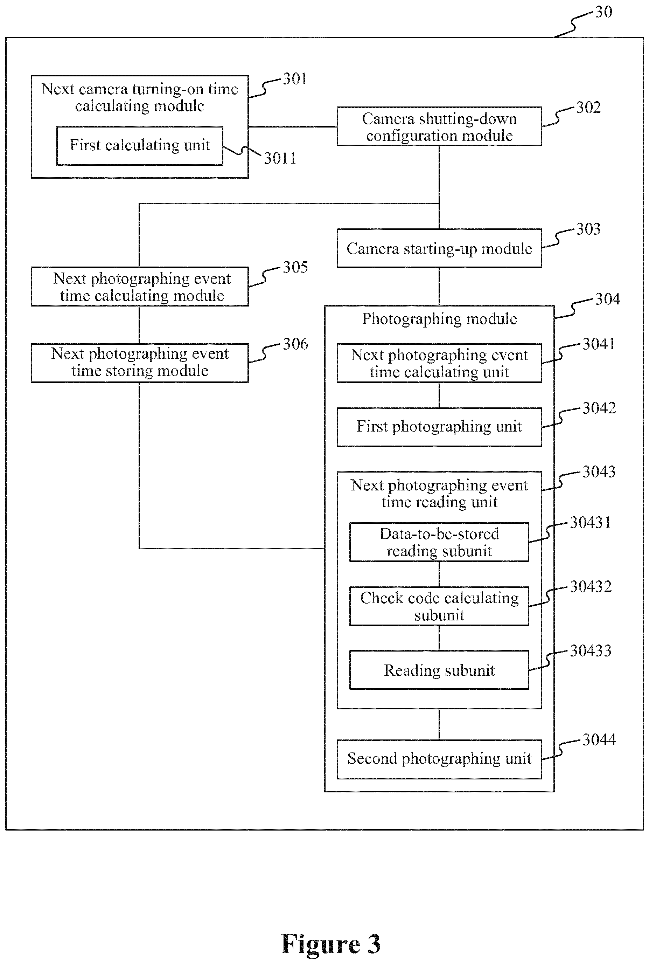

Figure 3 is a structural diagram illustrating a time-lapse photographing control apparatus 30 according to some example embodiments of the present invention.

The time-lapse photographing control apparatus 30 illustrated in Figure 3 comprises a next camera turning-on time calculating module 301, a camera shutting-down configuration module 302, a camera starting-up module 303, and a photographing module 304.

The next camera turning-on time calculating module 301 is adapted to calculate a time of the next turning-on of the camera if, after the camera has been caused to take a photograph, it is detected that a time-lapse photographing session has not concluded, the time of the next turning-on of the camera being earlier than the time of the next photographing event, the time of the next photographing event being the sum of the time of the current photographing event and the time interval between photographing events (shootings); the camera shutting-down configuration module 302 is adapted to utilize the time of the next turning-on of the camera to configure a real time clock, and shut down the camera; the camera starting-up module 303 is adapted to start up the camera when the real time clock reaches the time of the next turning-on of the camera; the photographing module 304 is adapted to cause the camera to take a photograph (capture an image) when the time of the next photographing event is reached.

In some example embodiments of the present invention, the camera is shut down after the current photographing event is completed (ended); a real time clock configured with the time of the next turning-on of the camera is utilized to trigger the camera to start up, and another photographing event takes place, so as to minimize the camera's power consumption throughout the entire duration of a time-lapse photographing session and maximize the camera's operational time, thereby enhancing camera performance and the user experience.

Preferably, the next camera turning-on time calculating module 301 may comprise a first calculating unit 3011 adapted to calculate the difference between the time of the next photographing event and the preset advance starting-up time value to be used as the time of the next turning-on of the camera.

In some example embodiments of the present invention, the photographing module 304 may comprise a next photographing event time calculating unit 3041 adapted to calculate and obtain the time of the next photographing event according to the time of the current photographing event and the time interval between photographing events (shootings); a first photograph-taking unit 3042 adapted to utilize a timer for timing, and, when the time of the next photographing event is reached, cause said camera to take a photograph.

In some other example embodiments of the present invention, the time-lapse photographing control apparatus 30 illustrated in Figure 3 may further comprise a next photographing event time calculating module 305 adapted to calculate the time of the next photographing event according to said time of the current photographing event and the time interval between photographing events (shootings); a next photographing event time storing module 306 adapted to save the time of the next photographing event to a non-volatile storage device.

Further, the photographing module 304 may comprise a next photographing event time reading unit 3043 adapted to read said time of the next photographing event from the non-volatile storage device; a second photograph-taking unit 3044 adapted to utilize a timer for timing, and, when the time of the next photographing event is reached, cause the camera to take a photograph.

Further, the next photographing event time storing module 306 calculates a CRC value for data to be stored, and stores said CRC value together with said data to be stored, in order to be used to check, at the time of reading, said data to be stored, said data to be stored comprising said time of the next photographing event.

Further, the next photographing event time reading unit 3043 may comprise: a data-to-be-stored reading subunit 30431 adapted to read said data to be stored from said non-volatile storage device; a check code calculating subunit 30432 adapted to calculate the CRC check code for said data to be stored; a reading subunit 30433 adapted to use said data to be stored as said time of the next photographing event if said CRC check code is consistent with said CRC value.

Please refer to the relevant descriptions in Figures 1 through 2 for more information on the principles and ways of operating for said time-lapse photographing control apparatus 30; no redundant description is detailed here.

An example embodiment of the present invention provides a readable storage medium in which computer instructions are stored; the steps in the method for controlling time-lapse photographing as illustrated Figure 1 or Figure 2 and discussed above may be executed when said computer instructions are run. The storage medium may comprise a ROM, a RAM, a magnetic disk, or an optical disc.

An example embodiment of the present invention provides a camera, the camera comprising a storage device and a processor, the storage device storing computer instructions that can be run on the processor. The steps in the method for controlling time-lapse photographing as illustrated in Figure 1 or Figure 2 and discussed above may be executed when the processor runs the computer instructions. The camera comprises but is not limited to a single-lens reflex camera, a Micro Four Thirds camera, a digital camera, a sports camera, and other cameras.

Notwithstanding the above disclosure of the present invention, it does not limit the present invention. Any person of skill in the art may make various alterations and changes that are not detached from the scope of the present invention; therefore, the scope of protection for the present invention is defined by the claims.

**Claims**

1. A computer-implemented method for controlling time-lapse photographing, the method comprising:

   detecting (S101; S201), after taking a photograph by a camera at a time of a current photographing event, whether a time-lapse photographing session at the camera has ended;
   calculating (S101; S201), in response to detecting that the time-lapse photographing session has not ended, a time of a next turning-on of the camera, the time of the next turning-on of the camera being earlier than the time of a next photographing event, the time of the next photographing event being the sum of the time of a current photographing event and a time interval between successive photographing events of the time-lapse photographing session;
   configuring (S102; S202) a real time clock using the time of the next turning-on of the camera;
   shutting down (S102; S202) the camera;
   starting up (S103; S205) the camera when the real time clock reaches the time of the next turning-on of the camera; and
   causing (S104; S207) the camera to take a photograph when the time of the next photographing event is reached.

2. The method according to claim 1, wherein calculating the time of the next turning-on of the camera comprises:

   calculating a difference between the time of the next photographing event and a preset time value to determine the time of the next turning-on of the camera.

3. The method according to claim 1 or claim 2, wherein causing the camera to take a photograph when the time of the next photographing event is reached comprises:

   calculating (S203) the time of the next photographing event according to the time of the current photographing event and the time interval between photographing events;
   utilizing (S207) a timer to determine when the time of the next photographing event is reached; and
   causing (S207) the camera to take a photograph when the time of the next photographing event is reached.

4. The method according to claim 1 or claim 2, further comprising:

   calculating (S203), after configuring the real time clock, the time of the next photographing event according to the time of the current photographing event and the time interval between photographing events; and
   saving (S204) the time of the next photographing event to a non-volatile storage device.

5. The method according to claim 4, wherein causing the camera to take a photograph when the time of the next photographing event is reached comprises:

   obtaining (S206) the time of the next photographing event from the non-volatile storage device;
   utilizing (S207) a timer to determine when the time of the next photographing event is reached; and
   causing (S207) the camera to take a photograph when the time of the next photographing event is reached.

6. The method according to claim 4 or claim 5, wherein saving the time of the next photographing event to the non-volatile storage device comprises:

   calculating a cycling redundancy check, CRC, value for data to be stored; and
   storing the CRC value together with the data to be stored for enabling checking of the stored data at the time of reading, the data to be stored comprising the time of the next photographing event.

7. The method according to claim 6, further comprising reading the time of the next photographing event from the non-volatile storage device by:

   reading the stored data from the non-volatile storage device;
   calculating a CRC check code for the read data; and
   if the CRC check code is consistent with the CRC value, using the read data as the time of the next photographing event.

8. A time-lapse photographing control apparatus, comprises:

   a processor; and
   a memory storing instructions which, when executed by the processor, cause the apparatus to the perform the method according to any of claims 1 to 7.

9. The apparatus of claim 8, wherein the apparatus is a camera.

10. The apparatus of claim 8 or claim 9, wherein the apparatus is a single-lens reflex camera, a Micro Four Thirds camera, a digital camera, or a sports camera.

11. A computer-readable storage medium storing computer instructions which, when executed by a processor of a computer, cause the computer to the perform the method according to any of claims 1 to 7.

Calculating a time of the next turning-on of the camera if, after the camera has been caused to take a photograph, it is detected that a time-lapse photographing session has not concluded, the time of the next turning-on of the camera being earlier than the time of the next photographing event, the time of the next photographing event being the sum of the time of the current photographing event and the time interval between shootings ——S101

↓

Utilizing the time of the next turning-on of the camera to configure a real time clock, and shutting down the camera ——S102

↓

Starting up said camera when the real time clock reaches the time of the next turning-on of the camera ——S103

↓

Causing said camera to take a photograph when said time of the next photographing event is reached ——S104

**100**

# Figure 1

Calculating a time of the next turning-on of the camera if, after the camera has been caused to take a photograph, it is detected that a time-lapse photographing session has not concluded, the time of the next turning-on of the camera being earlier than the time of the next photographing event, the time of the next photographing event being the sum of the time of the current photographing event and the time interval between shootings — S201

Utilizing said time of the next turning-on of the camera to configure a real time clock — S202

Calculating and obtaining the time of the next photographing event according to the time of the current photographing event and the time interval between shootings — S203

Saving the time of the next photographing event to a non-volatile storage device and shutting down the camera — S204

Starting up the camera when the real time clock reaches the time of the next turning-on of the camera — S205

Reading the time of the next photographing event from the non-volatile storage device — S206

Utilizing a timer for timing, and, when the time of the next photographing event is reached, causing the camera to take a photograph — S207

200

**Figure 2**

30

Next camera turning-on time calculating module — 301

First calculating unit — 3011

Camera shutting-down configuration module — 302

Camera starting-up module — 303

Next photographing event time calculating module — 305

Photographing module — 304

Next photographing event time calculating unit — 3041

Next photographing event time storing module — 306

First photographing unit — 3042

Next photographing event time reading unit — 3043

Data-to-be-stored reading subunit — 30431

Check code calculating subunit — 30432

Reading subunit — 30433

Second photographing unit — 3044

# Figure 3

Europäisches
Patentamt

European
Patent Office

Office européen
des brevets

# EUROPEAN SEARCH REPORT

**Application Number**

EP 18 19 9431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 002 436 A (ANDERSON ERIC C [US]) 14 December 1999 (1999-12-14) | 1-3,6-11 | INV. H04N5/232 |
| Y | * column 2, line 44 - column 7, line 45 * * figures 1-7 * | 4,5 | H04N1/21 H04N5/77 |
| | ----- | | |
| Y | JP 2015 029188 A (CANON KK) 12 February 2015 (2015-02-12) * paragraph [0010] - paragraph [0074] * * figures 1-7 * | 4,5 | |
| | ----- | | |

**TECHNICAL FIELDS SEARCHED (IPC)**

H04N

The present search report has been drawn up for all claims

| Place of search | Date of completion of the search | Examiner |
|---|---|---|
| The Hague | 26 February 2019 | Rocca, Delphine |

EPO FORM 1503 03.82 (P04C01)

## ANNEX TO THE EUROPEAN SEARCH REPORT
## ON EUROPEAN PATENT APPLICATION NO.

EP 18 19 9431

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2019

| Patent document cited in search report | | Publication date | Patent family member(s) | | Publication date |
|---|---|---|---|---|---|
| US 6002436 | A | 14-12-1999 | AU 9120798 A | | 16-03-1999 |
| | | | US 6002436 A | | 14-12-1999 |
| | | | WO 9911053 A1 | | 04-03-1999 |
| JP 2015029188 | A | 12-02-2015 | JP 6218480 B2 | | 25-10-2017 |
| | | | JP 2015029188 A | | 12-02-2015 |

For more details about this annex : see Official Journal of the European Patent Office, No. 12/82